# EUROPÄISCHE PATENTANMELDUNG

(11) **EP 0 548 398 A1**
(43) Veröffentlichungstag der Anmeldung: **30.06.1993**
(21) Anmeldenummer: 91122147.1
(22) Anmeldetag: 23.12.1991
(51) Int. Cl.: G06F 9/44

(54) **Verfahren zur Verwaltung von Programmen und Daten sowie Computersystem zur Durchführung des Verfahrens**

(71) Anmelder: International Business Machines Corporation, Armonk, N.Y. 10504 (US)
(72) Erfinder: Bandat, Kurt, Dr., A-1010 Wien (AT)
(74) Vertreter: Schäfer, Wolfgang, Dipl.-Ing.

(57) **Zusammenfassung**

Es ist ein System beschrieben zur Verwaltung von Programmen und Daten in den Speichermitteln eines Computersystems. Diese Programme und Daten sind als Komponenten zu Objekten zusammengesetzt, wobei die Objekte in verschiedenen Versionen vorhanden sein können. Erfindungsgemäß ist eine Objekte-Tabelle, Versionen-Tabellen und Komponenten-Tabellen vorgesehen, in die insbesondere bestimmte Zeitangaben und Adressverweise eingetragen sind. Mit Hilfe der genannten Tabellen wird erreicht, daß nur im Falle einer Änderung einer Komponente diese tatsächlich kopiert wird. Unveränderte Komponenten werden mit Hilfe der Tabellen den verschiedenen Versionen eines Objekts zugeordnet.

## Beschreibung

Die Erfindung betrifft ein Verfahren zur Verwaltung von Programmen und Daten, die in der Form von Objekten in Speichermitteln eines Computersystems abgespeichert sind, wobei verschiedene Versionen der Objekte vorhanden und die Objekte aus mehreren Komponenten zusammengesetzt sind.

Im Bereich der Software-Entwicklung für Computersysteme besteht schon seit längerer Zeit die Notwendigkeit, größere Software-Objekte, d.h. Programme und Daten, die zu einer gemeinsamen Sache gehören, in kleinere Komponenten aufzuteilen, um dadurch eine bessere Handhabbarkeit des gesamten Objekts zu erreichen. Muß eine Änderung an dem Objekt vorgenommen werden, so muß nur die betreffende Komponente kopiert und geändert werden, während alle anderen Komponenten unverändert bleiben können. Alle unveränderten Komponenten bilden dann eine alte Version des Objekts, während die kopierte und geänderte Komponente zusammen mit den anderen unveränderten Komponenten eine neue Version bilden. Trotz dieser Möglichkeit der Beschränkung der Änderung auf eine Komponente werden in vielen Computersystemen auch die nicht zu ändernden Komponenten kopiert und zusammen mit der geänderten Komponente als neue Version abgespeichert. Dies hat zur Folge, daß eine Vielzahl von Komponenten mehrfach vorhanden ist, daß also Speicherplatz in den Speichermitteln des Computersystems vergeudet wird.

Aufgabe der Erfindung ist es, ein Verfahren zur Verwaltung von Programmen und Daten der eingangs genannten Art zu schaffen, das eine optimale Ausnutzung der Speichermittel ermöglicht.

Diese Aufgabe wird bei einem Verfahren der eingangs genannten Art erfindungsgemäß dadurch gelöst, daß eine Objekte-Tabelle in den Speichermitteln abgespeichert wird, in der für jedes Objekt ein Objektname und je ein Verweis zu einer Versionen-Tabelle und einer Komponenten-Tabelle enthalten ist, daß an der ersten verwiesenen Stelle die Versionen-Tabelle in den Speichermitteln abgespeichert wird, in der für jede Version ein Abschlußdatum enthalten ist, bis zu dem die Version in Bearbeitung war, und daß an der zweiten verwiesenen Stelle die Komponenten-Tabelle in den Speichermitteln abgespeichert wird, in der für jede Komponente ein Komponentenname und ein Erstelldatum enthalten ist, das der Erstellung der Komponente entspricht, sowie ein Verweis zu einer Adresse, an der die Komponente in den Speichermitteln abgespeichert ist.

Mit Hilfe der Objekte-Tabelle, der Versionen-Tabellen und der Komponenten-Tabellen ist es möglich, ein mehrfaches Abspeichern gleicher Komponenten in den Speichermitteln zu vermeiden. Mit den in den genannten Tabellen enthaltenen Informationen können alle Komponenten einer bestimmten Version eines bestimmten Objektes aus den Speichermitteln ausgelesen werden. Ebenfalls ist es möglich, bestimmte Komponenten einer bestimmten Version aus den Speichermitteln auszulesen. Nur im Falle einer Änderung einer bestimmten Komponente wird diese kopiert, sofern die Komponente in einer anderen Version erzeugt wurde. Bei unveränderten Komponenten werden diese für verschiedene Versionen nicht vervielfacht, sondern es wird die unveränderte Komponente mit Hilfe der genannten Tabellen den verschiedenen Versionen zugeordnet. Durch die Ausgestaltung der Abschlußdaten und der Erstelldaten nicht nur als Angabe eines Tages, sondern in der Form von Tag und Uhrzeit, also in der Form eines Zeitpunktes, ist es möglich, die einzelnen Komponenten, Versionen und Objekte genau einander zuzuordnen.

Bei einer Ausgestaltung der Erfindung werden zur Bearbeitung eines der Objekte anhand des Objektnamens aus der Objekte-Tabelle die zugehörigen Verweise zu der Versionen-Tabelle und der Komponenten-Tabelle gelesen, damit dann aus der Komponenten-Tabelle alle Verweise zu Adressen gelesen werden können, denen als erste ein Erstelldatum zugeordnet ist, das älter ist als das in der Versionen-Tabelle zu der gewünschten Version angegebene Abschlußdatum. Dieses Abschlußdatum kennzeichnet, bis wann die gewünschte Version in Bearbeitung war. Jedes Erstelldatum, das älter ist als das Abschlußdatum, kennzeichnet somit eine Komponente, die vor Abschluß der gewünschten Version erstellt worden ist. Ein Erstelldatum einer Komponente, das gleich ist dem Abschlußdatum einer Version, ordnet diese Komponente bereits der nachfolgenden Version zu. Die erste dieser Komponenten, die im Rückblick vor Abschluß der Bearbeitung der gewünschten Version erstellt worden ist, wird als relevante Komponente herausgegriffen und der gewünschten Version zugeordnet. Dies wird mit allen in der Komponenten-Tabelle angegebenen Komponenten entsprechend vorgenommen, die dann insgesamt das zusammengesetzte Objekt der gewünschten Version bilden.

Bei einer weiteren Ausgestaltung der Erfindung wird zur Bearbeitung einer der Komponenten eines Objektes anhand des Komponentennamens aus der dem Objekt zugeordneten Komponenten-Tabelle der Verweis zu der Adresse gelesen, der als erster ein Erstelldatum zugeordnet ist, das älter ist als das in der Versionen-Tabelle zu der gewünschten Version des Objektes angegebene Abschlußdatum. Wie bereits erwähnt, kennzeichnet das Abschlußdatum, wann die Bearbeitung der gewünschten Version beendet worden ist. Es wird somit diejenige Komponente ausgewählt, die ausgehend von dieser Zeitangabe im Rückblick als erste erstellt worden ist, d.h., die im Rahmen der Bearbeitung der gewünschten Version als zeitlich letzte erstellt worden ist.

Soll die unter dem aus der Komponenten-Tabelle ausgelesenen Verweis abgespeicherte Komponente verändert werden, so wird sie zuerst kopiert und mit einem Erstelldatum, das dem Abschlußdatum entspricht, sowie mit einem Verweis auf eine Adresse, an der die kopierte Komponente in den Speichermitteln abgespeichert wird, in die Komponenten-Tabelle eingetragen. Auf diese Weise wird die zu ändernde Komponente unverändert den nachfolgenden Versionen weiterhin zur Verfügung gestellt, d.h. daß sich die Änderung der Komponente nicht in die nachfolgenden Versionen fortpflanzt, sondern nur in der Version zur Wirkung kommt, in der die Änderung erfolgt.

Bei einem erfindungsgemäßen Computersystem zur Durchführung des Verfahrens sind Speichermittel vorgesehen, in denen Programme und Daten in der Form von Objekten abgespeichert sind, wobei verschiedene Versionen der Objekte vorhanden und die Objekte aus mehreren Komponenten zusammengesetzt sind. Bei diesem Computersystem ist des weiteren vorgesehen, daß eine Objekte-Tabelle, eine Versionen-Tabelle und eine Komponenten-Tabelle in den Speichermitteln abgespeichert sind, daß in der Objekte-Tabelle für jedes Objekt ein Objektname und je ein Verweis zu der Versionen-Tabelle und der Komponenten-Tabelle enthalten ist, daß in der Versionen-Tabelle für jede Version ein Abschlußdatum enthalten ist, bis zu dem die Version in Bearbeitung war, und daß in der Komponenten-Tabelle für jede Komponente ein Komponentenname und ein Erstelldatum enthalten ist, das der Erstellung der Komponente entspricht, sowie ein Verweis zu einer Adresse, an der die Komponente in den Speichermitteln abgespeichert ist.

Weitere vorteilhafte Ausgestaltungen der Erfindung ergeben sich aus der nachfolgenden, anhand der Zeichnungen vorgenommenen Beschreibung eines Ausführungsbeispiels der Erfindung.
- Fig. 1: zeigt ein Blockdiagramm einer Ausführungsform der Erfindung,
- Fig. 2: zeigt eine zu der Ausführungsform der Fig. 1 gehörende Objekte-Tabelle,
- Fig. 3: zeigt eine zu der Ausführungsform der Fig. 1 gehörende Versionen-Tabelle, und
- Fig. 4: zeigt eine zu der Ausführungsform der Fig. 1 gehörende Komponenten-Tabelle.

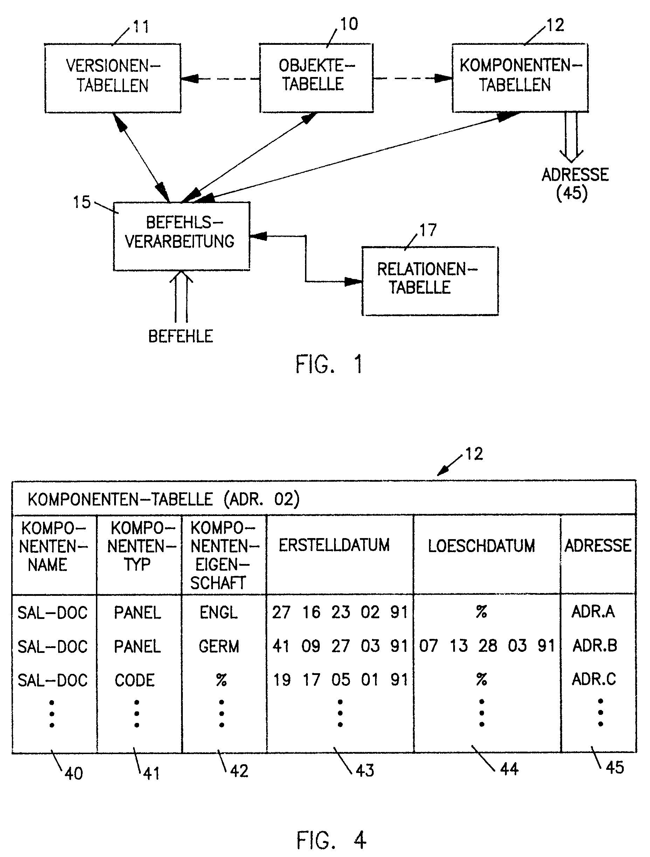

Das schematische Blockdiagramm der Fig. 1 zeigt einen Ausschnitt aus einem Computersystem, das wenigstens eine Recheneinheit und Speichermittel aufweist. In den Speichermitteln sind Daten abgespeichert, die nachfolgend als Komponenten bezeichnet werden. Aus diesen Komponenten setzen sich Objekte zusammen, wobei von jedem Objekt verschiedene Versionen vorhanden sind.

Des weiteren sind in den Speichermitteln eine Objekte-Tabelle 10, Versionen-Tabellen 11 und Komponenten-Tabellen 12 abgespeichert.

Wie in der Fig. 2 dargstellt, enthält die Objekte-Tabelle 10 eine Spalte für einen Objektnamen 20, eine Spalte für einen Objekttyp 21, eine Spalte für einen ersten Verweis 22 und eine Spalte für einen zweiten Verweis 23. In jeder Zeile der Objekte-Tabelle 10 sind die jeweils zugehörigen Angaben für ein bestimmtes Objekt enthalten. Der Objektname 20 kann frei gewählt werden, während der Objekttyp 21 von den jeweiligen Daten des Objekts abhängig ist. In der Spalte für den ersten Verweis 22 ist für jedes Objekt eine Adresse angegeben, die auf eine zu diesem Objekt zugehörige Versionen-Tabelle 11 verweist. In der Spalte für den zweiten Verweis 23 ist für jedes Objekt eine Adresse angegeben, die auf eine zu dem Objekt zugehörige Komponenten-Tabelle 12 verweist. Jedem Objekt ist somit eine Versionen-Tabelle 11 und eine Komponenten-Tabelle 12 zugeordnet. Die Anzahl der Objekte entspricht also der Anzahl der Versionen-Tabellen 11 bzw. Komponenten-Tabellen 12. Die Verweise von der Objekte-Tabelle 10 auf die zugehörigen Versionen-Tabellen 11 und die zugehörigen Komponenten-Tabellen 12 sind in der Fig. 1 durch einen gestrichelten Pfeil angedeutet. Die einzelnen Versionen-Tabellen 11 bzw. Komponenten-Tabellen 12 können eine vorgegebene Länge aufweisen oder über abgespeicherte Längenangaben flexibel lang ausgestaltet sein.

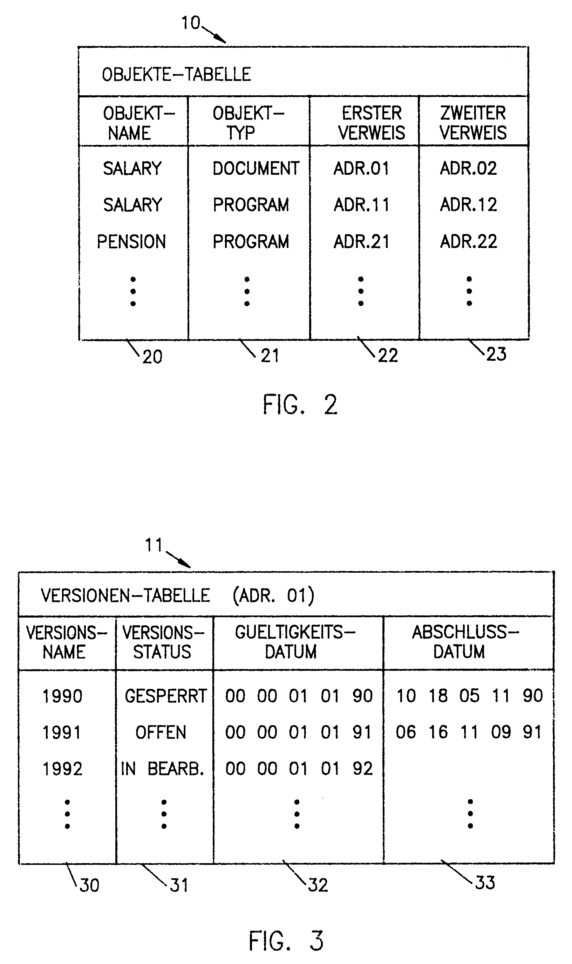

Gemäß der Fig. 3 enthält eine Versionen-Tabelle 11 eine Spalte für einen Versionsnamen 30, eine Spalte für einen Versionsstatus 31, eine Spalte für ein Gültigkeitsdatum 32 sowie eine Spalte für ein Abschlußdatum 33. In jeder Zeile der Versionen-Tabelle 11 sind die entsprechenden Informationen für eine bestimmte Version des durch den ersten Verweis 22 zugehörigen Objekts enthalten. Der Versionsname 30 kann beispielsweise in der Form einer Jahreszahl vorliegen. Der Versionsstatus 31 kann "gesperrt" sein, was bedeutet, daß die Komponenten der Version nur noch gelesen, jedoch nicht mehr verändert werden dürfen. Der Versionsstatus 31 kann des weiteren "offen" sein, mit der Bedeutung, daß die Komponenten der Version gelesen und verändert werden dürfen. Schließlich ist es möglich, daß der Versionsstatus 31 die Information "in Bearbeitung" enthält, was bedeutet, daß diese Version als zeitlich letzte gerade in Bearbeitung und noch nicht abgeschlossen ist. Bei dem Gültigkeitsdatum 32 einer Version handelt es sich um denjenigen Zeitpunkt, ab dem die Version gültig sein soll. Das Gültigkeitsdatum 32 besteht aus Tag und Uhrzeit und ist in der folgenden Form in der Versionen-Tabelle 11 angegeben: Minute, Stunde, Tag, Monat, Jahr, wobei für jede Angabe zwei Ziffern vorgesehen sind. Der durch das Gültigkeitsdatum 32 angegebene Zeitpunkt gehört zum Gültigkeitsbereich der Version. Durch das Abschlußdatum 33 einer Version wird derjenige Zeitpunkt festgelegt, an dem die Bearbeitung der Version beendet war. Das Abschlußdatum 33 ist in derselben Art und Weise angegeben, wie das Gültigkeitsdatum 32. Der durch das Abschlußdatum 33 angegebene Zeitpunkt ist derjenige Zeitpunkt nach Abschluß der Bearbeitung der zugehörigen Version, oder in anderen Worten, der Zeitpunkt des Beginns der Bearbeitung der nachfolgenden Version. Aus den Abschlußdaten 33 zweier aufeinanderfolgender Versionen ergibt sich der Zeitraum, in dem die jüngere der beiden Versionen bearbeitet worden ist. Bei der ältesten Version eines Objekts ist dieser Zeitraum in die Vergangenheit offen; bei der jüngsten, in Bearbeitung befindlichen Version eines Objekt geht dieser Zeitraum von dem Abschlußdatum 33 der vorhergehenden Version bis in die Gegenwart.

Wie in der Fig. 4 dargestellt ist, weist eine Komponenten-Tabelle 12 eine Spalte für einen Komponentennamen 40 auf, sowie eine Spalte für einen Komponententyp 41, eine Spalte für eine Komponenteneigenschaft 42, eine Spalte für ein Erstelldatum 43, eine Spalte für ein Löschdatum 44 und eine Spalte für eine Adresse 45. In jeder Zeile der Komponenten-Tabelle 12 sind die entsprechenden Angaben für jeweils eine Komponente, sofern vorhanden, enthalten. Die Komponenten gehören dabei zu dem über den zweiten Verweis 23 zugeordneten Objekt. Die Komponentennamen 40 können frei gewählt werden, während der Komponententyp abhängig ist von der Bedeutung der in der Komponente enthaltenen Daten. Bei der Komponenteneigenschaft 42 kann es sich beispielsweise um verschiedene Sprachen handeln, also beispielsweise ob die zugehörige Komponente Ausgaben auf einem Bildschirm in englischer oder in deutscher Sprache vornimmt. Durch das Erstelldatum 43 wird derjenige Zeitpunkt festgelegt, an dem die Komponente fertiggestellt worden ist. Das Erstelldatum 43 ist in derselben Art und Weise wie das Gültigkeitsdatum 32 angegeben. Bei dem durch das Erstelldatum 43 angegebenen Zeitpunkt handelt es sich um den tatsächlichen Zeitpunkt der Fertigstellung der Komponente. Durch das Löschdatum 44 wird derjenige Zeitpunkt festgelegt, an dem eine Komponente gelöscht worden ist. Das Löschdatum 44 ist in derselben Art und Weise angegeben wie das Gültigkeitsdatum 32. Wie bei dem Erstelldatum 43, so handelt es sich auch bei dem Löschdatum 44 um den Zeitpunkt, an dem die Komponente tatsächlich gelöscht worden ist. Durch die Adresse 45 wird auf diejenige Stelle in den Speichermitteln verwiesen, an der die jeweilige Komponente abgespeichert ist. Bei der Adresse 45 kann es sich beispielsweise um eine physikalische Adresse handeln, die direkt auf die Komponente verweist.

Wie aus der Fig. 1 weiter hervorgeht, ist eine Befehlsverarbeitung 15 vorgesehen, die mit der Objekte-Tabelle 10, der Versionen-Tabelle 11 und der Komponenten-Tabelle 12 zusammenwirkt. Des weiteren ist eine Relationen-Tabelle 17 vorgesehen, die ebenfalls mit der Befehlsverarbeitung 15 gekoppelt ist. Die Relationen-Tabelle 17 ist in den Speichermitteln des Computersystems abgespeichert und enthält Verknüpfungen zwischen Komponenten innerhalb eines Objektes. So können beispielsweise in der Relationen-Tabelle 17 Abhängigkeiten in Form von Strukturbäumen abgespeichert sein, wodurch von einem Objekt oder von bestimmten Komponenten abhängige andere Objekte oder Komponenten aufgefunden werden können.

Die Befehlsverarbeitung 15 kann beispielsweise im Rahmen des Betriebssystems des Computersystems oder als Microprogramm vorgesehen sein. Wie aus der Fig. 1 ersichtlich ist, ist die Befehlsverarbeitung 15 in jedem Fall dazu vorgesehen, Befehle entgegenzunehmen und mit Hilfe der Objekte-Tabelle 10, der Versionen-Tabellen 11, der Komponenten-Tabellen 12 und der Relationen-Tabelle 17 zu verarbeiten. Das Ergebnis der Befehlsverarbeitung 15 ist die Ausgabe der Adresse 45 aus der Komponenten-Tabelle 12. Diese Befehlsverarbeitung 15 wird nachfolgend anhand von bestimmten Befehlen näher erläutert.

Wenn beispielsweise mit dem Befehl "Create Objekt: Objektname, Objekttyp" ein neues Objekt erstellt werden soll, so trägt die Befehlsverarbeitung 15 diesen Objektnamen und den Objekttyp in die zugehörigen Spalten 20 und 21 der Objekte-Tabelle 10 ein. Voraussetzung dafür ist allerdings, daß noch kein anderes eingetragenes Objekt denselben Objektnamen und denselben Objekttyp aufweist. Danach bereitet die Befehlsverarbeitung 15 eine neue Versionen-Tabelle 11 und eine neue Komponenten-Tabelle 12 vor und ordnet diese dem neuen Objekt zu. Dies geschieht dadurch, daß die Adresse der Versionen-Tabelle 11 als erster Verweis 22 in die entsprechende Spalte der Objekte-Tabelle 10 eingetragen wird und daß in gleicher Weise die Adressee der für das neue Objekt vorgesehenen Komponenten-Tabelle 12 als zweiter Verweis 23 in die entsprechende Spalte der ObjekteTabelle 10 eingetragen wird. Damit ist der genannte Befehl abgearbeitet, und es können Versionen und Komponenten des Objekts in die Versionen-Tabelle 11 und die Komponenten-Tabelle 12 eingetragen werden.

Wenn beispielsweise mit dem Befehl "Create Version: Objektname, Objekttyp, Versionsname, Versionsstatus, Gültigkeitsdatum" eine neue Version eines bestimmten Objektes erstellt werden soll, so trägt die Befehlsverarbeitung 15 in der über den ersten Verweis 22 angegebenen Versionen-Tabelle 11 des zugehörenden Objektes den Versionsnamen 30, den Versionsstatus 31 und das Gültigkeitsdatum 32 in die entsprechenden Spalten der Versionen-Tabelle 11 ein. Des weiteren wird bei älteren Versionen das tatsächliche derzeitige Datum dieser Eintragung oder ein anderer, zwischen dem derzeitigen Datum und dem Gültigkeitsdatum liegender Zeitpunkt als Abschlußdatum 33 in die entsprechende Spalte der vorhergehenden Version eingetragen. Voraussetzung für diese Eintragungen ist allerdings, daß der vorgesehene Versionsname in der Versionen-Tabelle 11 noch nicht vorhanden ist. Der Versionsstatus einer neuen Version ist üblicherweise "in Bearbeitung", so daß bei dieser Version kein Abschlußdatum 33 in der entsprechenden Spalte der zugehörigen Versionen-Tabelle 11 vorhanden ist.

Wenn beispielsweise mit dem Befehl "Create Komponente: Objektname, Objekttyp, Versionsname, Komponentenname, Komponententyp, Komponenteneigenschaft" eine neue Komponente erstellt werden soll, so trägt die Befehlsverarbeitung 15 in der über den zweiten Verweis 23 angegebenen Komponenten-Tabelle 12 des zugehörenden Objektes den Komponentennamen 40, den Komponententyp 41 und die Komponenteneigenschaft 42 in die entsprechenden Spalten der Komponenten-Tabelle 12 ein. Handelt es sich bei der in dem Befehl angegebenen Version um die gerade in Bearbeitung befindliche Version, so trägt die Befehlsverarbeitung 15 das tatsächliche derzeitige Datum als Erstelldatum 43 in die entsprechende Spalte der Komponenten-Tabelle 12 ein. Handelt es sich hingegen um eine frühere, also um eine nicht in Bearbeitung befindliche Version, so trägt die Befehlsverarbeitung 15 das Abschlußdatum 33 der jeweils vorhergehenden Version 11 als Erstelldatum 43 in die entsprechende Spalte der Komponenten-Tabelle 12 ein. Voraussetzung für diese Eintragungen ist allerdings, daß der Komponentenname, der Komponententyp und die Komponenteneigenschaft nicht schon in der Komponenten-Tabelle 12 enthalten sind. Schließlich bereitet die Befehlsverarbeitung 15 einen Bereich in den Speichermitteln vor und ordnet diesen Bereich der neuen Komponente zu. Dies wird dadurch erreicht, daß die Anfangsadresse des Bereichs als Adresse 45 in die entsprechende Spalte der Komponenten-Tabelle 12 eingetragen wird. Die Adresse 45 wird dann über die Befehlsverarbeitung 15 an den auslösenden Befehl zurückgegeben, so daß nunmehr die neue Komponente in den vorgesehenen Bereich eingegeben werden kann. Der über die Adresse 45 angegebene Bereich kann eine feste Länge aufweisen oder über abgespeicherte Längenangaben flexibel lang ausgestaltet sein.

Wenn beispielsweise mit dem Befehl "Edit Komponente: Objektname, Objekttyp, Versionsname, Komponentenname, Komponententyp, Komponenteneigenschaft" eine bestimmte, bereits vorhandene Komponente geändert werden soll, so sucht die Befehlsverarbeitung 15 mit Hilfe des zweiten Verweises 23 die genannte Komponente in der zu dem betreffenden Objekt gehörigen Komponenten-Tabelle 12. Wird dort die genannte Komponente gefunden, so vergleicht die Befehlsverarbeitung 15 das Erstelldatum 43 der Komponente mit dem Abschlußdatum derjenigen Version, die der in dem Befehl angegebenen Version vorausgeht. Dieses Abschlußdatum 33 erhält die Befehlsverarbeitung 15 mit Hilfe des ersten Verweises 22 aus der Versionen-Tabelle 11. Handelt es sich bei der in dem Befehl angegebenen Version um die derzeit in Bearbeitung befindliche Version, und ist das Erstelldatum 43 der bestimmten, zu ändernden Komponente gleich oder jünger als das Abschlußdatum 32 der vorhergehenden Version, so wird die bestimmte Komponente nicht kopiert, sondern es wird die Adresse 45 dieser Komponente direkt an den auslösenden Befehl zurückgegeben, so daß nunmehr die Änderungen in der Komponente vorgenommen werden können. Handelt es sich bei der in dem Befehl angegebenen Version um die gerade in Bearbeitung befindliche Version, ist jedoch das Erstelldatum 43 der bestimmten, zu ändernden Komponente älter als das Abschlußdatum der vorhergehenden Version, so wird in diesem Fall die Komponente kopiert. Diese kopierte Komponente wird dann in die Komponenten-Tabelle 12 neu eingetragen, und zwar mit dem tatsächlichen derzeitigen Datum als Erstelldatum 43. Die bereits vorhandene Komponente und die neue, kopierte Komponente weisen in diesem Fall dieselben Komponentennamen, Komponententypen und Komponenteneigenschaften auf, unterscheiden sich jedoch in ihrem Erstelldatum. Die bereits vorhandene Komponente bleibt dadurch unverändert erhalten, während die neue, kopierte Komponente nunmehr verändert werden kann. Zu diesem Zweck wird die Anfangsadresse der kopierten Komponente als Adresse 45 in die Komponenten-Tabelle 12 eingetragen und von der Befehlsverarbeitung 15 an den auslösenden Befehl zurückgegeben. Handelt es sich bei der in dem Befehl angegebenen Version nicht um die derzeit in Bearbeitung befindliche Version, sondern um eine ältere Version, so sucht die Befehlsverarbeitung die zu ändernde Komponente nur in einem Zeitbereich, der älter ist als das Abschlußdatum 33 der in dem Befehl angegebenen Version. Die Befehlsverarbeitung 15 sucht also nach derjenigen Komponente, deren Erstelldatum 43 ausgehend von dem Abschlußdatum 33 im Rückblick als erstes älter ist. Diese Komponente wird kopiert und in die Komponenten-Tabelle 12 neu eingetragen. Als Erstelldatum für diese kopierte Komponente wird in diesem Fall jedoch nicht das tatsächliche derzeitige Datum eingetragen, sondern das Abschlußdatum 33 derjenigen Version, die der in dem Befehl angegebenen Version vorhergeht. Die bereits vorhandene und die neue, kopierte Komponente weisen somit dieselben Komponentennamen, Komponententypen und Komponenteneigenschaften auf, unterscheiden sich jedoch in ihrem Erstelldatum. Die bereits vorhandene Komponente bleibt unverändert erhalten, muß jedoch unter Umständen gelöscht werden, insbesondere wenn ihr Erstelldatum jünger ist als das Erstelldatum der kopierten Komponente. Die neue, kopierte Komponente weist ein Erstelldatum 43 auf, das in dem Zeitbereich der in dem Befehl angegebenen Version liegt; die kopierte Komponente ist damit dieser in dem Befehl angegebenen Version zugeordnet. Die neue, kopierte Version kann nunmehr verändert werden, was dadurch erreicht wird, daß die Befehlsverarbeitung 15 die Anfangsadresse der kopierten Komponente als Adresse 45 in die Komponenten-Tabelle 12 einträgt und des weiteren diese Adresse 45 an den den gesamten Vorgang auslösenden Befehl zurückgibt.

Wenn beispielsweise mit einem Befehl "Delete Komponente: Objektname, Objekttyp, Versionsname, Komponentenname, Komponententyp, Komponenteneigenschaft" eine Komponente gelöscht werden soll, so sucht die Befehlsverarbeitung mit Hilfe des ersten Verweises 22 und des zweiten Verweises 23 die entsprechende Komponente in der Komponenten-Tabelle 12. Handelt es sich bei der in dem Befehl angegebenen Version um die derzeit in Bearbeitung befindliche Version, so wird als Löschdatum in die Spalte 44 der Komponenten-Tabelle 12 der tatsächliche derzeitige Zeitpunkt von der Befehlsverarbeitung 15 eingetragen. Handelt es sich hingegen bei der in dem Befehl angegebenen Version nicht um die derzeit in Bearbeitung befindliche Version, sondern um eine vorhergehende Version, so sucht die Befehlsverarbeitung 15 in den der angegebenen Version nachfolgenden Versionen ebenfalls nach der genannten Komponente. Bei erfolgloser Suche trägt die Befehlsverarbeitung 15 eine neue Version zwischen der in dem Befehl angegebenen Version und der dieser nachfolgenden Version in die Versionen-Tabelle 11 ein. Der Versionsname, der Versionsstatus und das Gültigkeitsdatum entsprechen dabei denjenigen der in dem Befehl angegebenen Version, als Abschlußdatum 33 wird jedoch das Erstelldatum 43 der in der in dem Befehl angegebenen Version aufgefundenen Komponente von der Befehlsverarbeitung 15 eingetragen. Danach wird dieses Erstelldatum 43 der aufgefundenen Komponente ebenfalls als Löschdatum in die entsprechende Spalte der Komponenten-Tabelle 12 eingetragen.

Wenn beispielsweise mit einem Befehl "Collect Objekt: Objektname, Objekttyp, Versionsname" alle Komponenten eines bestimmten Objekts einer bestimmten Version ausgegeben werden sollen, so sucht die Befehlsverarbeitung 15 in der durch den zweiten Verweis 23 angegebenen Komponenten-Tabelle 12 alle diejenigen Komponenten heraus, deren Erstelldatum 43 älter ist als das über den ersten Verweis 22 in der Versionen-Tabelle 11 angegebene Abschlußdatum 33 der in dem Befehl angegebenen Version. Es wird immer diejenige Komponente ausgewählt, deren Erstelldatum 43 rückschauend als erstes älter ist als das genannte Abschlußdatum 33. Komponenten, die ein Löschdatum 44 aufweisen, werden nicht berücksichtigt. Die Befehlsverarbeitung 15 liest dann aus der Komponenten-Tabelle 12 die Adressen 45 aller auf diese Weise aufgefundenen Komponenten aus und gibt diese Adressen 45 beispielsweise in der Form einer Adress-Tabelle an den auslösenden Befehl zurück. Danach können mit Hilfe der Adressen 45 alle Komponenten des Objekts aus den Speichermitteln ausgelesen werden.

## Patentansprüche

1. Verfahren zur Verwaltung von Programmen und Daten, die in der Form von Objekten in Speichermitteln eines Computersystems abgespeichert sind, wobei verschiedene Versionen der Objekte vorhanden und die Objekte aus mehreren Komponenten zusammengesetzt sind,
dadurch gekennzeichnet,
daß eine Objekte-Tabelle (10) in den Speichermitteln abgespeichert wird, in der für jedes Objekt ein Objektname (20) und je ein Verweis (22, 23) zu einer Versionen-Tabelle (11) und einer Komponenten-Tabelle (12) enthalten ist,
daß an der ersten verwiesenen Stelle (22) die Versionen-Tabelle (11) in den Speichermitteln abgespeichert wird, in der für jede Version ein Abschlußdatum (33) enthalten ist, bis zu der die Version in Bearbeitung war, und
daß an der zweiten verwiesenen Stelle (23) die Komponenten-Tabelle (12) in den Speichermitteln abgespeichert wird, in der für jede Komponente ein Komponentenname (40) und ein Erstelldatum (43) enthalten ist, das der Erstellung der Komponente entspricht, sowie ein Verweis zu einer Adresse (45), an der die Komponente in den Speichermitteln abgespeichert ist.

2. Verfahren nach Anspruch 1, dadurch gekennzeichnet, daß zur Erstellung eines neuen Objekts ein neuer Objektname (20) sowie Verweise (22, 23) zu einer neuen Versionen-Tabelle (11) und einer neuen Komponenten-Tabelle (12) in die Objekte-Tabelle (10) eingetragen werden.

3. Verfahren nach Anspruch 1 oder 2, dadurch gekennzeichnet, daß bei Erstellung einer neuen Version ein neues Abschlußdatum (33) in der Versionen-Tabelle (11) eingetragen wird.

4. Verfahren nach einem der Ansprüche 1 bis 3, dadurch gekennzeichnet, daß bei Erstellung einer neuen Komponente ein neuer Komponentenname (40), ein neues Erstelldatum (43) sowie ein Verweis zu einer Adresse (45) in der Komponenten-Tabelle (12) eingetragen wird.

5. Verfahren nach einem der Ansprüche 1 bis 4, dadurch gekennzeichnet, daß zur Bearbeitung eines der Objekte anhand des Objektnamens (20) aus der Objekte-Tabelle (10) die zugehörigen Verweise (22, 23) zu der Versionen-Tabelle (11) und der Komponenten-Tabelle (12) gelesen werden, und daß aus der Komponenten-Tabelle (12) alle Verweise zu Adressen (45) gelesen werden, denen als erste ein Erstelldatum (43) zugeordnet ist, das älter ist als das in der Versionen-Tabelle (11) zu der gewünschten Version angegebene Abschlußdatum (33).

6. Verfahren nach einem der Ansprüche 1 bis 5, dadurch gekennzeichnet, daß zur Bearbeitung einer der Komponenten eines Objektes anhand des Komponentennamens (40) aus der dem Objekt zugeordneten Komponenten-Tabelle (11) der Verweis zu der Adresse (45) gelesen wird, der als erster ein Erstelldatum (43) zugeordnet ist, das älter ist als das in der Versionen-Tabelle (11) zu der gewünschten Version des Objektes angegebene Abschlußdatum (33).

7. Verfahren nach Anspruch 6, dadurch gekennzeichnet, daß die unter der aus der Komponenten-Tabelle (11) ausgelesenen Adresse (45) abgespeicherte Komponente kopiert und mit einem Erstelldatum, das dem Abschlußdatum entspricht, sowie mit einer Adresse (45), an der die kopierte Komponente in den Speichermitteln abgespeichert ist, in die Komponenten-Tabelle (12) eingetragen wird.

8. Verfahren nach einem der Ansprüche 1 bis 7, dadurch gekennzeichnet, daß zum Löschen einer Komponente ein Löschdatum (44) in die Komponenten-Tabelle (12) eingetragen wird, das dem Zeitpunkt des Löschens der Komponente entspricht.

9. Computersystem mit Speichermitteln, in denen Programme und Daten in der Form von Objekten abgespeichert sind, wobei verschiedene Versionen der Objekte vorhanden und die Objekte aus mehreren Komponenten zusammengesetzt sind,
dadurch gekennzeichnet,
daß eine Objekte-Tabelle (10), eine Versionen-Tabelle (11) und eine Komponenten-Tabelle (12) in den Speichermitteln abgespeichert sind,
daß in der Objekte-Tabelle (10) für jedes Objekt ein Objektname (20) und je ein Verweis (22, 23) zu der Versionen-Tabelle (11) und der Komponenten-Tabelle (12) enthalten ist,
daß in der Versionen-Tabelle (11) für jede Version ein Abschlußdatum (33) enthalten ist, bis zu dem die Version in Bearbeitung war, und
daß in der Komponenten-Tabelle (12) für jede Komponente ein Komponentenname (40) und ein Erstelldatum (43) enthalten ist, das der Erstellung der Komponente entspricht, sowie ein Verweis zu einer Adresse (45), an der die Komponente in den Speichermitteln abgespeichert ist.

10. Computersystem nach Anspruch 9, dadurch gekennzeichnet, daß in der Versionen-Tabelle (11) für jede Version ein Versionsstatus (31) enthalten ist.

11. Computersystem nach Anspruch 9 oder 10, dadurch gekennzeichnet, daß in der Komponenten-Tabelle (12) für jede Komponente eine Komponenteneigenschaft (42) enthalten ist.

12. Computersystem nach einem der Ansprüche 9 bis 11, dadurch gekennzeichnet, daß in der Komponenten-Tabelle (12) ein Löschdatum (44) enthalten ist, das dem Zeitpunkt des Löschens der Komponente entspricht.

13. Computersystem nach einem der Ansprüche 9 bis 12, dadurch gekennzeichnet, daß eine Relationen-Tabelle (17) in den Speichermitteln abgespeichert ist, in der Verknüpfungen zwischen Komponenten angegeben sind.
